Europäisches Patentamt

European Patent Office    (11) Numéro de publication: **0 128 813**

Office européen des brevets    **B1**

(12) **FASCICULE DE BREVET EUROPÉEN**

(45) Date de publication du fascicule du brevet:
04.02.87

(21) Numéro de dépôt: **84401129.6**

(22) Date de dépôt: **04.06.84**

(51) Int. Cl.⁴: **F 16 D 1/08,** F 16 D 3/40

(54) **Dispositif de détection de la position d'un arbre dans un élément d'accouplement, notamment une mâchoire de joint de cardan.**

(30) Priorité: **13.06.83 FR 8309757**

(43) Date de publication de la demande:
**19.12.84 Bulletin 84/51**

(45) Mention de la délivrance du brevet:
**04.02.87 Bulletin 87/6**

(84) Etats contractants désignés:
**DE GB IT NL SE**

(56) Documents cité:
**FR-A-2 458 002**
**GB-A-816 174**
**US-A-2 673 750**
**US-A-4 125 337**
**US-A-4 289 414**

(73) Titulaire: **NACAM Société dite:, Route de Blois,
F-41100 Vendome (FR)**

(72) Inventeur: **Haldric, Bernard, 15 rue Charles
Lindbergh, F-41100 Vendôme (FR)**

(74) Mandataire: **Polus, Camille, c/o Cabinet Lavoix 2,
Place d'Estienne d'Orves, F-75441 Paris Cedex 09
(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention est relative aux éléments d'accouplement tels que les mâchoires de joint de cardan et se rapporte plus particulièrement aux éléments d'accouplement à moyeu fendu.

Certains joints de cardan sont formés de deux mâchoires reliées chacune à un arbre ou organe analogue et d'un croisillon reliant les deux mâchoires entre elles.

Dans de nombreux cas, les mâchoires presentent un moyeu fendu serré sur l'arbre correspondant par une vis.

Il existe également des éléments d'accouplement d'un arbre avec un autre organe tel qu'un disque de liaison élastique, utilisés généralement dans les colonnes de direction de véhicules automobiles.

Ces éléments qui, comme un grand nombre de mâchoires de joint de cardan, sont obtenus par pliage et roulage de flans de tôle, présentent généralement un moyeu fendu.

De tels éléments sont par exemple décrits dans FR-A- 2 458 002.

US-A- 4 125 337 décrit un accouplement de transmission de couple comprenant un boîtier pourvu d'une ouverture dont une portion est non circulaire, ladite ouverture étant adaptée pour recevoir une partie non circulaire d'un arbre, des moyens pour bloquer sélectivement la partie non circulaire de l'arbre dans l'ouverture, ces moyens de blocage étant sollicités en position bloquée et étant sélectivement déplaçables vers une position débloquée, des moyens pour maintenir sélectivement les moyens de blocage en position débloquée de sorte que l'arbre peut être librement reçu dans ladite ouverture, les moyens de maintien étant déplaçables entre une première et une seconde positions, des moyens pour déplacer automatiquement les moyens de maintien vers leur première position lorsque l'arbre est retiré de sorte que les moyens de maintien maintiennent les moyens de blocage dans leur position débloquée en vue de recevoir ledit arbre et des moyens pour libérer automatiquement les moyens de maintien en les déplaçant vers leur seconde position lorsque ledit arbre est reçu dans ladite ouverture de sorte que les moyens de blocage peuvent se déplacer en position bloquée.

L'invention vise à créer un dispositif destiné à s'assurer que le moyeu de l'organe d'accouplement est disposé dans la position qu'il doit occuper sur l'arbre auquel il doit être fixé.

Elle a donc pour objet un dispositif de détection de la position d'un élément d'accouplement à moyeu fendu muni d'oreilles formant une pince de serrage sur un arbre ou autre organe de transmission de couple, lesdites oreilles étant traversées par des trous de réception d'une vis de serrage de la pince, dispositif caractérisé en ce qu'il comporte un organe élastique monté entre les oreilles de la pince et s'étendant en travers des trous ménagés dans lesdites oreilles pour empêcher la mise en place de la vis de serrage en l'absence dudit arbre, l'organe élastique étant escamotable par l'introduction de l'arbre dans le moyeu dudit élément d'accouplement.

L'invention sera mieux comprise à l'aide de la description qui va suivre, d'un exemple de réalisation, donnée uniquement à titre d'exemple et faite en se référant aux dessins annexés, sur lesquels :

- la Fig. 1 est une vue en élévation d'un joint de cardan équipé d'un dispositif de détection suivant l'invention;
- la Fig. 2 est une vue en élévation et en coupe d'une mâchoire de joint de cardan pourvue d'un dispositif de détection suivant l'invention avant son engagement sur un arbre;
- la Fig. 3 est une vue en élévation et en coupe correspondant à celle de la Fig. 2, montrant l'arbre engagé dans le moyeu de la mâchoire;
- la Fig. 4 est une vue de dessous d'une mâchoire de joint de cardan pourvue d'un autre mode de réalisation de dispositif de détection suivant l'invention:
- la Fig. 5 est une coupe suivant la ligne 5-5 de la Fig. 4;
- la Fig. 6 est une vue de dessous d'une mâchoire de joint de cardan équipée d'encore un autre mode de réalisation de dispositif de détection suivant l'invention;
- la Fig. 7 est une vue suivant la ligne 7-7 de la Fig. 6; et
- la Fig. 8 est une vue en perspective d'une variante à largeur variable du dispositif de détection.

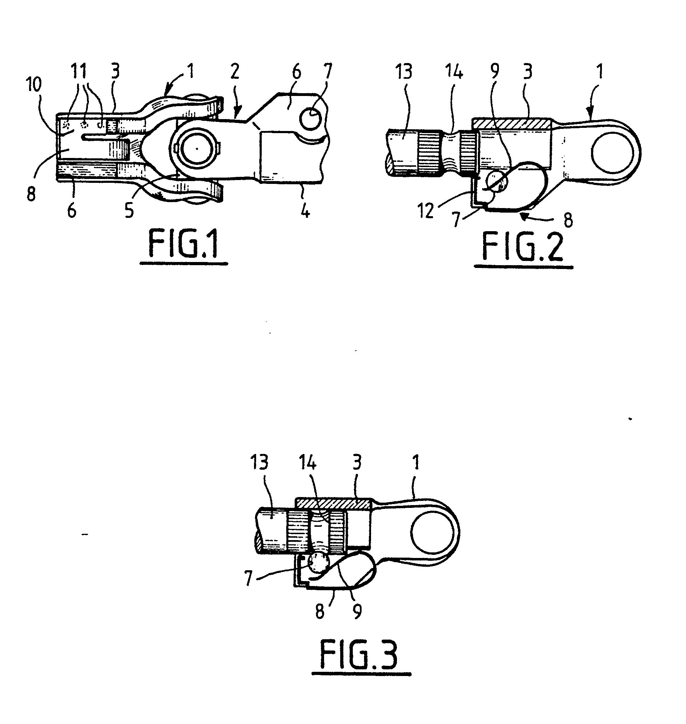

On a représenté sur la Fig. 1, un joint de cardan comportant une première et une seconde mâchoires 1 et 2 à moyeux fendus 3 et 4 dont les branches sont réunies entre elles par un croisillon 5. Chacun des moyeux 3 et 4 comportent, comme connu en soi des oreilles 6 de forme générale plane destinées à constituer une pince de serrage du moyeu correspondant sur un arbre ou autre organe de transmission de couple. Les oreilles 6 sont traversées par des trous alignés 7 destinés à recevoir une vis de serrage.

Chacune des mâchoires du joint de cardan est pourvue d'un dispositif 8 de détection de la présence et de la position d'un arbre ou autre organe de transmission de couple dans le moyeu de ladite mâchoire. Ce dispositif de détection est constitué par un organe élastique formé d'un ressort à lame recourbé sur lui-même de la manière représentée à la Fig. 2, engagé entre les oreilles de la pince de serrage, de façon que l'extrémité recourbée 9 de la lame soit disposée en travers des trous 7 de passage de la vis de serrage lorsqu'aucun arbre n'est introduit dans le moyeu de la mâchoire. Le dispositif de détection 8 comporte en outre une languette latérale 10 au moyen de laquelle il est fixé à l'une des oreilles 6 de la pince du moyeu, par exemple par soudage comme représenté en 11 sur la Fig. 1, à l'aide de vis ou par tout autre moyen approprié.

C'est ainsi que la languette latérale 10 peut également être fixée à l'oreille 6 correspondante par rivetage ou encore par sertissage obtenu par écrasement d'une protubérance ménagée sur l'oreille 6 sous la forme d'un ergot introduit dans un trou correspondant prévu dans la languette 10.

On voit par ailleurs à la Fig. 2, que le dispositif de détection comporte de plus une branche 12 formant talon, s'étendant perpendiculairement à la languette de fixation 10.

On voit sur la Fig. 2 qu'avant l'introduction de l'arbre 13 pourvu d'une gorge de positionnnement et d'immobilisation 14, dans le moyeu 3 de la mâchoire, l'extrémité recourbée 9 de la lame 8 occupe une position transversale aux trous 7 de réception de la vis de serrage, de sorte que cette vis ne peut être introduite en l'absence de l'arbre 13 dans le moyeu.

En revanche, lorsque l'arbre 13 à été mis en place dans le moyeu 3, comme le montre la Fig. 3, son extrémité comprime l'extrémité recourbée 9 de la lame 8 et provoque le dégagement des trous 7 qui peuvent alors recevoir une vis de serrage non représentée, qui assure également une immobilisation positive du moyeu 3 de la mâchoire sur l'arbre 13 par engagement dans la gorge périphérique 14.

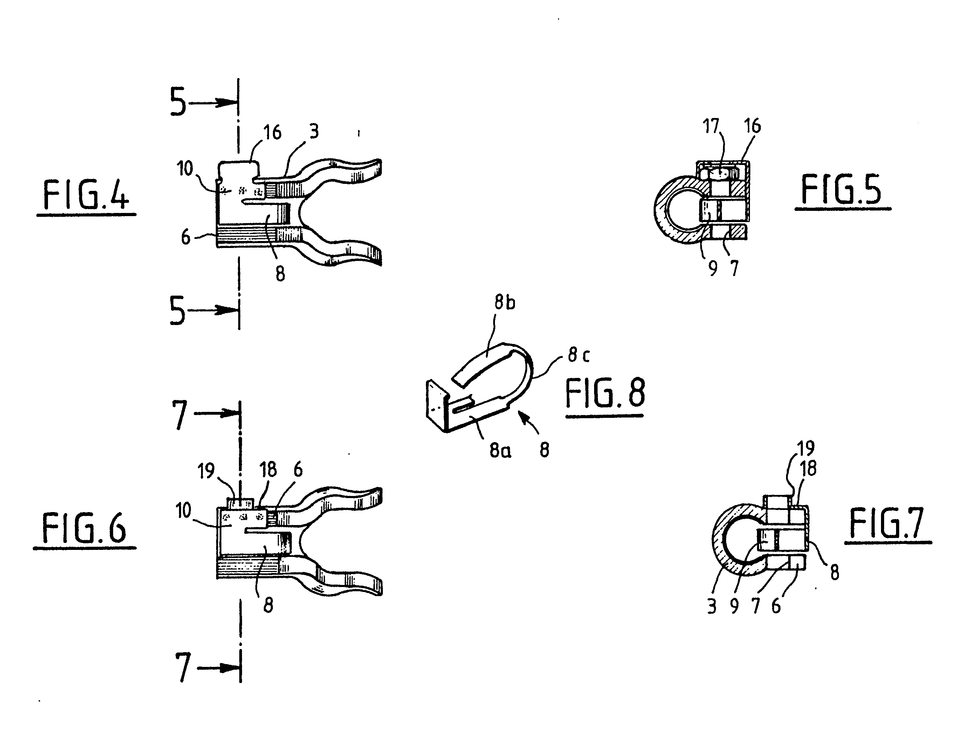

La mâchoire de joint de cardan représentée à la Fig. 4 est pourvue d'un dispositif de détection semblable à celui équipant les mâchoires représentées aux Fig. 1 à 3 à l'exception du fait que ce dispositif comporte outre la lame incurvée 8 disposée entre les oreilles 6 du moyeu 3 et la languette de fixation 10, une portion 16 pliée à angle droit dans un plan parallèle à l'axe de la mâchoire et destinée à assurer le maintien d'un écrou 17 dans lequel doit être engagée la vis de de serrage qui traverse les trous 7 ménagés dans les oreilles 6. Cette portion rabattue 16 est mieux représentée à la Fig. 5.

Selon une autre variante représentée à la Fig. 6, le dispositif de détection comporte comme dans les modes de réalisation précédents, une lame 8 repliée sur elle même constituant l'organe de détection proprement dit, une languette latérale 10 de fixation du dispositif sur une oreille 6 de la pince du moyeu et une partie 18 rabattue à angle droit dans laquelle est ménagée par déformation une saillie annulaire 19 alignée avec les trous 7 ménagés dans les oreilles 6 de la pince du moyeu. La saillie annulaire 19 peut être soit taraudée pour remplacer l'écrou de serrage, soit encore être utilisé comme frein d'écrou.

La lame 8 repliée sur elle-même étant engagée entre les oreilles 6 de la pince de moyeu, elle peut, si sa largeur est correctement déterminée, faire office d'entretoise de limitation des déformations des oreilles 6 si le couple qu'il leur est appliqué par la vis et l'écrou de serrage dépasse une certaine valeur.

Dans les divers modes de réalisation qui viennent d'être decrits, la lame repliée sur elle-même du dispositif de détection est de largeur constante. On peut cependant réaliser cette lame de la manière représentée à la Fig. 8 sur laquelle on voit qu'elle est de largeur variable et comporte, entre deux secteurs 8a, 8b de largeur plus importante, destinés éventuellement à former entretoise de limitation du rapprochement des oreilles 6 de la pince de serrage, un secteur intermédiaire 8c plus mince. Un tel agencement donne à la lame 8 une plus grande souplesse dans la région où elle doit subir des déformations élastiques du fait de l'engagement de l'arbre dans le moyeu.

Le dispositif de détection qui vient d'être décrit fournit un moyen simple et peu coûteux permettant de s'assurer de la présence d'un arbre dans le moyeu d'une mâchoire de joint de cardan ou d'un élément d'accouplement, ce qui évite les erreurs de montage et favorise une automatisation de l'assemblage de ces organes.

**Revendications**

1. Dispositif de détection de la position d'un élément d'accouplement à moyeu fendu (3) muni d'oreilles (6) formant une pince de serrage sur un arbre (13) ou autre organe de transmission de couple, lesdites oreilles (6) étant traversées par des trous (17) de réception d'une vis de serrage de la pince, dispositif caractérisé en ce qu'il comporte un organe élastique (8) monté entre les oreilles (6) de la pince et s'étendant en travers des trous (7) ménagés dans lesdites oreilles pour empêcher la mise en place de la vis de serrage en l'absence dudit arbre, l'organe élastique (8) étant escamotable par l'introduction de l'arbre (13) dans le moyeu (3) dudit élément d'accouplement.

2. Dispositif suivant la revendication 1, caractérisé en ce que ledit organe élastique (8) comporte une lame recourbée sur elle-même, ladite lame etant fixée à une oreille (6) de la pince du moyeu au moyen d'une languette (10) venue de matière, l'extrémité recourbée (9) de la lame s'étendant en travers des trous (7) de passage de la vis de serrage ménagés dans les oreilles (6), en l'absence de l'arbre (13), dans le moyeu.

3. Dispositif suivant la revendication 2, caractérisé en ce que ladite languette (10) est fixée à l'oreille (6) de la pince du moyeu par soudage (11) par des vis, par rivetage ou par sertissage.

4. Dispositif suivant l'une des revendications 1 à 3, caractérisé en ce qu'il comprend, venue de matière avec ladite languette de fixation (10), à l'opposé de la lame élastique (8), une portion (16) rabattue à angle droit de maintien d'un écrou (17) destiné à coopérer avec la vis de serrage de la pince du moyeu.

5. Dispositif suivant l'une des revendications 1 à 3, caractérisé en ce qu'il comprend, venue de matière avec ladite languette de fixation (10), à l'opposé de la lame élastique (8), une portion (18) rabattue à angle droit dans laquelle est façonnée une saillie annulaire (19) pouvant être taraudée pour former un écrou coopérant avec la vis de serrage ou bien pouvant constituer un frein d'écrou.

6. Dispositif suivant l'une quelconque des revendications précédentes, caractérisé en ce que ladite lame élastique (8) forme entretoise de limitation du rapprochement des oreilles (6) lorsque la force de serrage exercée sur lesdites oreilles dépasse une valeur prédéterminée.

7. Dispositif suivant l'une quelconque des revendications précédentes, caractérisé en ce que ladite lame élastique (8) comporte entre deux parties (8a, 8b) de plus grande largeur, une partie rétrécie (8c) destinée à accroître la souplesse de la lame dans la région ou elle doit subir les plus fortes déformations.

**Patentansprüche**

1. Vorrichtung zur Feststellung der Lage eines Kupplungselements mit geschlitzter Nabe (3), welche mit Lappen (6) versehen ist, die eine Zange zur Klemmung auf einer Welle (13) oder einer anderen Drehmomentübertragungseinrichtung bilden, wobei die Lappen (6) Von Löchern (7) zur Aufnahme einer Klemmschraube für die Zange durchsetzt sind, wobei die Vorrichtung dadurch gekennzeichnet ist, daß sie ein zwischen den Lappen (6) der Zange angebrachtes und sich quer über die in den Lappen ausgebildeten Löcher (7) erstreckendes elastisches Element zur Verhinderung einer Anbringung der Klemmschraube in Abwesenheit der Welle umfaßt, wobei das elastische Element (8) durch das Einführen der Welle (13) in die Nabe (3) des Kupplungselements einziehbar ist.

2. Vorrichtung nach Anspruch 1, dadurch gekennzeichnet, daß das elastische Element (8) eine auf sich selbst rückgekrümmte Lamelle aufweist, wobei die Lamelle an einem Lappen (6) der Zange der Nabe mittens einer mit ihr einstückigen Lasche (10) befestigt ist, wobei sich das rückgekrümmte Ende (9) der Lamelle bei Abwesenheit der Welle (13) in der Nabe quer über die in den Lappen (6) ausgebildeten Schraubendurchtrittslöcher (7) erstreckt.

3. Vorrichtung nach Anspruch 2, dadurch gekennzeichnet, daß die Lasche (10) am Lappen (6) der Zange der Nabe durch Schweißen (11), mit Schrauben, durch Vernieten oder durch Versicken befestigt ist.

4. Vorrichtung nach einem der Ansprüche 1 bis 3, dadurch gekennzeichnet, daß sie einstückig mit der Befestigungslasche (10) abgewandt von der elastischen Lamelle (8) einen rechtwinklig abgebogenen Abschnitt (16) zum Festhalten einer für ein Zusammenwirken mit der Klemmschraube der Zange der Nabe bestimmten Mutter (17) umfaßt.

5. Vorrichtung nacn einem der Ansprüche 1 bis 3, dadurch gekennzeichnet, daß sie einstückig mit der Befestigungslasche (10) abgekehrt von der elastischen Lamelle (8) einen rechtwinklig abgebogenen Abschnitt (18) umfaßt, in den ein ringförmiger Vorsprung (19) eingeformt ist, welcher zur Bildung einer mit der Klemmschraube zusammenwirkenden Mutter mit einem Innengewinde versehen sein kann oder auch eine Sicherung bilden kann.

6. Vorrichtung nach irgendeinem der Vorstehenden Ansprüche, dadurch gekennzeichnet, daß die elastische Lamelle (8) ein Abstandsstück zur Begrenzung der Annäherung der Lappen (6), wenn die auf die Lappen ausgeübte Klemmkraft einen vorgegebenen Wert überschreitet, bildet.

7. Vorrichtung nach irgendeinem der Vorstehenden Ansprüche, dadurch gekennzeichnet, daß die elastische Lamelle (8) zwischen zwei Abschnitten (8a, 8b) größerer Breite einen verengten Abschnitt (8c) zur Steigerung der Biegsamkeit der Lamelle in dem Bereich, wo sie die stärksten Formänderungen durchmachen muß, aufweist.

**Claims**

1. A device for detecting the position of a coupling element having a split hub (3) and ears (6) of clamping means for the hub, on a shaft (13) or other torque transmitting element, said ears (6) having throughway apertures (7) for receiving a screw for tightening the clamping means, said device being characterized in that it comprises a resiliently yieldable element (8) which is mounted between the ears (6) of the clamping means and extends across the apertures (7) formed in the ears so as to prevent the positioning of the tightening screw in the absence of said shaft, the resiliently yieldable element (8) being retractable by the insertion of the shaft (13) in the hub (3) of the coupling element.

2. A device according to claim 1, characterized in that the yieldable element (8) comprises a strip bent onto itself, said strip being fixed to one of the ears (6) of the clamping means of the hub by means of a tab (10) in one piece with said strip, the bent end portion (9) of the strip extending across the apertures (7) for the passage of the tightening screw formed in the ears (6) in the absence of the shaft (13) in the hub.

3. A device according to claim 2, characterized in that said tab (10) is fixed to the ear (6) of the clamping means of the hub by welding (11), screws, rivetting or a setting operation.

4. A device according to any one of the claims 1 to 3, characterized in that it comprises in one piece with said fixing tab (10), in opposed relation to the resiliently yieldable strip (8), a portion (16) bent at a right angle for maintaining a nut (17) adapted to cooperate with the tightening screw of the clamping means of the hub.

5. A device according to any one of the claims 1 to 3, characterized in that it comprises, in one piece with said fixing tab (10) and in opposed relation to the resiliently yieldable strip (8), a portion (18) bent at a right angle in which bent portion is formed an annular projection (19) which may be tapped for forming a nut operating with the tightening screw or which may constitute means for stopping rotation of a nut.

6. A device according to any one of the preceding claims, characterized in that said resiliently yieldable strip (8) forms a spacer member for limiting the extent to which the ears (6) move toward each other when the clamping force exerted on said ears exceeds a predetermined value.

7. A device according to any one of the preceding claims, characterised in that said resiliently yieldable strip (8) includes, between two portions (8a, 8b) of greater width, a narrower portion (8c) adapted to increase the flexibility of the strip in the region where it must be subjected to the greatest deformations.

0 128 813

FIG.1

FIG.2

FIG.3

1

FIG.4

FIG.5

FIG.6

FIG.7

FIG.8

0128813